# EUROPEAN PATENT SPECIFICATION

(11) **EP 2 016 320 B1**
(45) Date of publication and mention of the grant of the patent: **10.06.2015**
(21) Application number: 07706086.1
(22) Date of filing: 04.02.2007
(51) Int. Cl.: F16K 31/22, B60K 15/03

(54) **FUEL VENT VALVE AND IMPROVEMENT THEREOF**
KRAFTSTOFFENTLÜFTUNGSVENTIL UND VERBESSERUNG DAVON
SOUPAPE DE PURGE DE CARBURANT ET SES PERFECTIONNEMENTS

(30) Priority: 11.05.2006 IL 17555706
(43) Date of publication of application: 21.01.2009
(73) Proprietor: Raval A.C.S. LTD, 85515 D.N. Halutza (IL)
(72) Inventor: VULKAN, Omer, 85510 D. N. Halutza (IL); EHRMAN, Moshe, 85515 D.N. Halutza (IL); BAR-LEV, Avigail, 84849 Beer Sheva (IL)
(74) Representative: Minoja, Fabrizio
(86) International application number: PCT/IL2007/000143
(87) International publication number: WO 2007/132442

(56) References cited:
- EP-A1- 0 724 098
- US-A- 5 749 347

## Description

### FIELD OF THE INVENTION

The present invention generally relates to improvements in rollover vent valves and more particularly the invention is concerned with a rollover vent valve with a two way valve serving as a pressure/under pressure relief valve and as a check valve.

### BACKGROUND OF THE INVENTION

In a fuel system of vehicle there is typically provided a fuel tank associated with a fuel pump module connected by a fuel delivery line to the fuel rail and injectors of the engine, with a plurality of valve means provided to regulate fuel and vapor flow.

One of such valves is the rollover vent valve designed to allow, on the one hand, for the venting of fuel vapor from a vehicle fuel tank to the atmosphere or to a vapor recovery system such as a carbon canister, and, on the other hand, to ensure the closure of the valve under certain conditions. These conditions can arise either when, as a result of excessive filling of the tank fuel, passes into the valve or, and most significantly, when as a result of a sudden change of position of the tank, such as, for example, when the vehicle and the tank rollover, fuel could escape from the tank through the otherwise opened valve.

It is important to ensure positive opening of the valve, either when the fuel level drops or when the vehicle and its fuel tank return to their normal position. Thus, the larger the vent outlet the greater the differential pressure acting on the valve and, in consequence, the greater the closing force effective on the valve.

Such a rollover vent valves are generally well known, examples thereof being described, inter alia, in U.S. Patent Serial No. 5,738,132 discloses a rollover vent valve comprising a housing having a fluid inlet and a fluid outlet, the latter comprising a substantially elongated slit-like outlet aperture of the housing bounded by a valve seating. There is furthermore provided a float member located in the housing and axially displaceable within the housing between the inlet and the outlet; an elongated flexible closure membrane strip anchored at one end thereof to an end of the float member adjacent the outlet and at a portion thereof offset with respect to the outlet; spring biasing means located within the housing and bearing on the float member so as to spring bias it in the direction of the outlet; whereby the spring biasing together with buoyancy forces acting on the float member tend to press the membrane strip into sealing engagement with the outlet aperture whilst gravity forces acting on the float member tend to displace the float member away from the outlet so as to progressively detach the strip from sealing engagement with the outlet.

Furthermore, at locations with a hot climate, the fuel in the tank system expands when the drive stops after an operating phase. It is problematic when the fuel expands in the feed line that connects the tank with the combustion engine, resulting in pressure increase in fuel feed line, which may result in fuel leakage or in malfunctioning of the engine. On the other hand, at low environment temperatures and under fuel consumption, pressure within the fuel tank decreases, which may result in deformation or cracking of the fuel tank.

Thus it is a requirement that a fuel system be suited for fuel supply at a relative high flow rate in a direction from the fuel tank to the engine whilst allowing for venting the fuel tank to prevent vacuum in the fuel tank.

For that purpose, it has been suggested to install various types of check valves in line between the fuel valves and the fuel treating device (carbon canister) or other components of the fuel system.

US 5749347 **discloses a fuel leakage prevention system for preventing fuel leakage by closing an evaporation gas releasing passage disposed between a fuel tank and a canister by a float-type valve upon rolling over of a vehicle.**

It is an object of the present invention to provide an improved rollover vent valve integrating a rollover vent valve with a double check valve, offering advantages of space economy, manufacturing and installation costs and labor, etc.

### SUMMARY OF THE INVENTION

According to the present invention there is provided a fuel valve suited for fitting in a vehicle's fuel system, and being operative in different conditions as will be explained hereinafter. The valve is an integration of a valve and double check valve serving as a pressure holder (*'pressure retention valve'*), thus saving space and costs of manufacturing, assembly and installation.

According to the invention there is provided a fuel valve comprising a primary valve and a pressure responsive auxiliary valve, both being axially accommodated and displaceable within a common housing formed with a fluid inlet and a fluid outlet port, and a partition extending between said primary valve and said auxiliary valve; said partition comprising a flow passage extending between a primary port at a bottom face of the partition and an auxiliary port at a top face of the partition; said primary port sealable by a sealing member of the primary valve and said auxiliary port sealable by a sealing member of the auxiliary valve, **wherein the auxiliary valve comprises a piston member axially displaceable within the housing and is formed with one or more apertures, and a check valve facilitating fluid flow only in direction from the fluid outlet port towards the auxiliary port, said sealing member of the auxiliary valve is further fitted for scaling engagement of said one or more apertures at the event of flow in direction from the auxiliary port towards the outlet port.**

According to a particular design of the invention the primary valve is a rollover valve and where the primary port is a substantially elongated slit-like aperture bounded by a primary valve seating; a float member is axially displaceable within the housing between the fluid inlet and the primary port; where the sealing member of the primary valve is in the form of an elongated flexible closure membrane strip anchored at one end thereof to an end of the float member adjacent primary port and at a portion thereof offset with respect to the primary port; and further there is provided a spring biasing member located within the housing and bearing on the float member so as to spring bias it in the direction of the primary port.

The auxiliary valve comprises a piston member axially displaceable within the housing and comprising a bleeding valve being a check valve facilitating fluid flow only in direction from the fluid outlet port towards the auxiliary port and sealable by the sealing member of the auxiliary valve; and wherein the piston is normally biased into sealing engagement of the auxiliary port and is displaceable to facilitate fluid flow in direction from the auxiliary port towards the fluid outlet port.

The valve according to the present invention functions in accordance with the level of fuel within the fuel tank and further responsive to varying pressure conditions residing within the fuel tank. At the event of rollover of the vehicle, or at steep inclinations, or upon fuel entering the valve housing (e.g. as a result of sudden acceleration/deceleration or high fuel level) - the float member of the primary valve displaces into sealing engagement of the primary port.

Other functional states of the valve are responsive to pressure differences, as follows:
- When **P**ₜₐₙₖ < **Pₐₜₘ** then the auxiliary port and the primary port open to air the fuel tank namely allow fluid flow from the valve's fluid outlet port towards the valve's fluid inlet;
- When **P**ₐₜₘ < **Pₜₐₙₖ < (Pₐₜₘ** + **P_{spring})** then the auxiliary port and the bleeding valve remain sealed, thus retaining a predetermined pressure within the fuel tank (*'pressure; holding position'*)*;* and
- When **Pₜₐₙₖ > (Pₐₜₘ** + **P_{spring})** then the primary port and the auxiliary port open so as to discharge fuel vapor pressure from the fuel tank, namely allow fluid flow from the fuel tank towards the valve's fluid outlet port.
Wherein:
▪ **Pₜₐₙₖ** denotes the fuel vapor pressure within the fuel tank;
▪ **Pₐₜₘ** denotes the atmospheric pressure; and
▪ **P_{spring}** denotes the effective pressure applied by the biasing effect applied on the piston into sealing engagement of the auxiliary port.

A typical pressure rate at the so called pressure holding position, would be for example in the range of about 3Kpa < **Pₜₐₙₖ** < 4Kpa.

The bleeding valve comprises one or more apertures formed in the piston member with a deformable sealing member fitted for sealing engagement of said one or more apertures at the event of flow in direction from the auxiliary port towards the outlet port; and wherein said deformable sealing member deforms to open said one or more apertures so as to facilitate fluid flow in a reverse direction.

By a further specific design, the deformable sealing member is articulated to a bottom face of the piston member and serves also for sealing engagement of the auxiliary port.

The piston member comprises a stud projecting from a bottom wall thereof and fitted for retention of the deformable sealing member; said stud projecting into the auxiliary port whenever the piston member is at its normally biased position, sealingly engaging the auxiliary port.

And by still a particular design a peripheral portion of the deformable sealing member is clamped between a peripheral seal seat of the auxiliary port and a bottom face of the piston member; and wherein a central portion of the deformable sealing member is deformable for sealing/unsealing of the one or more apertures.

### BRIEF DESCRIPTION OF THE DRAWINGS

In order to understand the invention and to see how it may be carried out in practice, an embodiment will now be described, by way of a non-limiting example only, with reference to the accompanying drawings, in which:
**Fig. 1** is an isometric view of a valve according to the invention;
**Fig. 2** is a longitudinal section of a rollover valve according to the present invention, at a so-called open/venting position;
**Fig. 3** is an isometric exploded view of the valve of Fig. 1;
**Fig. 4** is a longitudinal section of a rollover valve of Fig. 1, in a fully closed position;
**Fig. 5** is a longitudinal section of a rollover valve of Fig. 1, with the primary valve open and the auxiliary valve sealed; and
**Fig. 6** is a longitudinal section of a rollover valve of Fig. 1, in an exhausting position.

### DETAILED DESCRIPTION OF AN EXEMPLARY EMBODIMENT

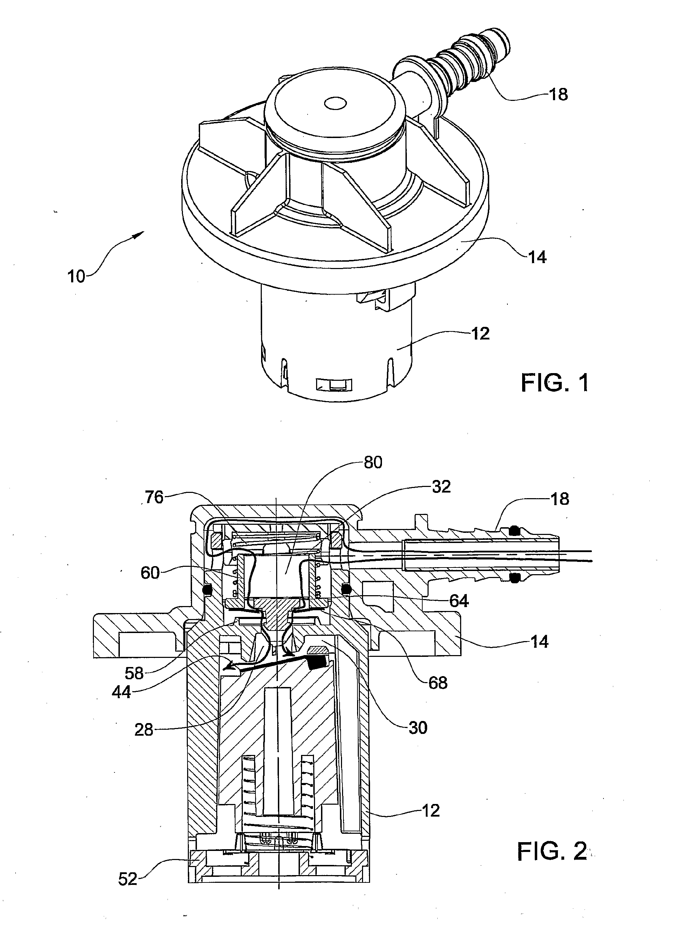

In Fig. 1 there is illustrated a valve in accordance with the present invention generally designated **10** comprising a cylindrical housing **12** depending from a flange **14** fitted for sealing attachments over a top surface of a fuel tank (not shown) such that the housing **12** extends into the space of the fuel tank. Extending from an upper portion of the flange **14** there is a fluid outlet port **18** connectable to a vapor recovery system such as a carbon canister, etc. (not shown).

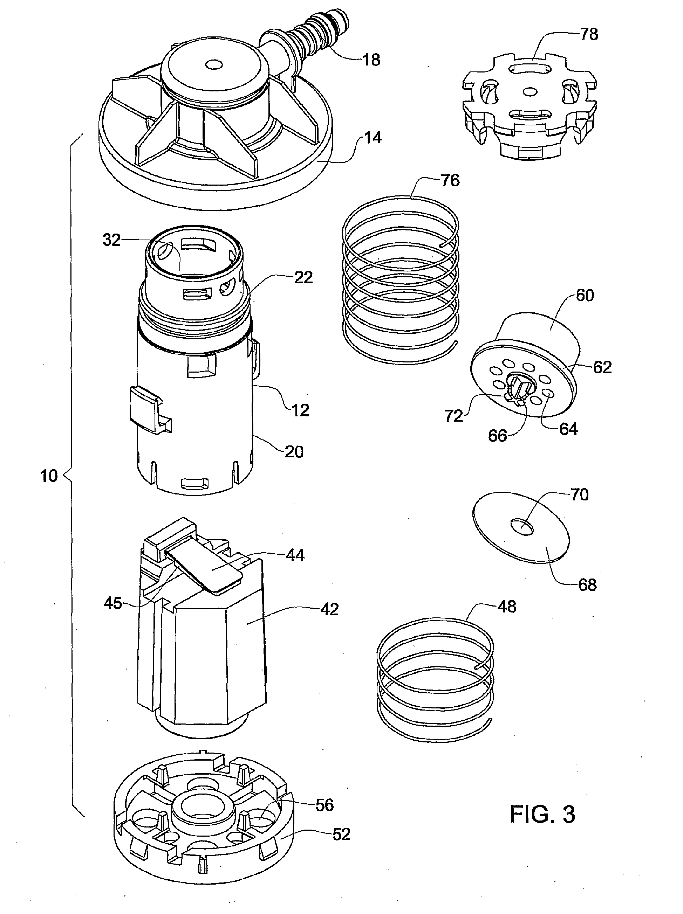

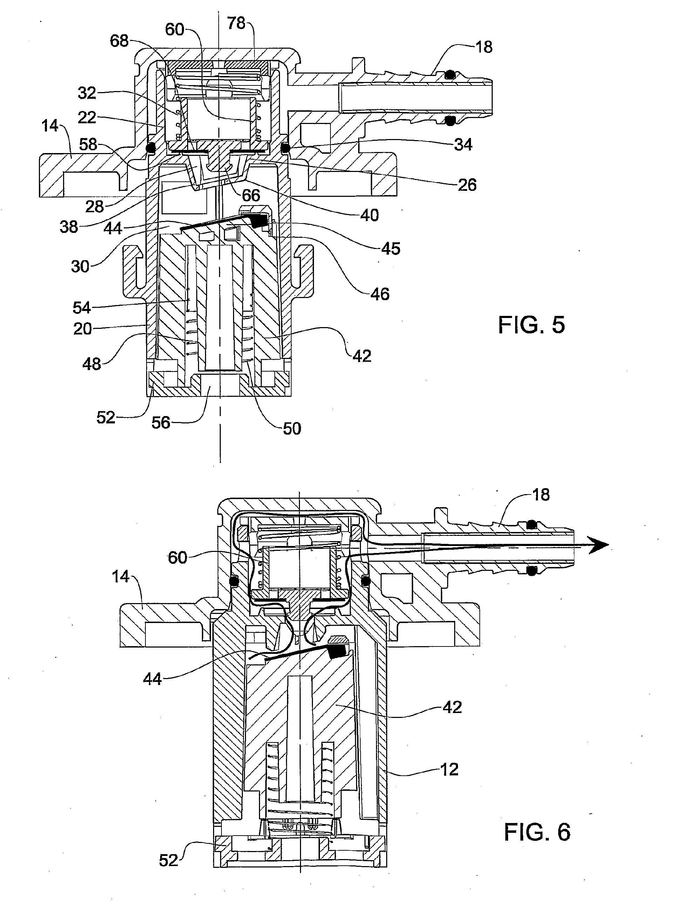

It can further be seen in the section views of Figs. 2, 4 to 6 and in the exterior view of Fig. 3, the cylindrical housing **12** comprising a bottom portion **20** and an upper portion **22** partitioned from one another by a partition wall **26** (best seen in Fig. 5) formed with a flow path **28** extending between a bottom space **30** and top space **32** as will be discussed hereinafter. The housing **12** is snap fitted into the flange **14** and is sealingly retained by a sealing O-ring **34.** The flow path passage **28** is formed at its bottom end, extending within the bottom space **30,** a primary port **38** being a substantially elongated slit-like aperture bounded by a primary valve seating **40.** A float member **42** is axially displaceable within the bottom space **30** and is prevented from rotation within the housing owing to axially extending ribs (not shown) formed in the housing and slidingly received within corresponding recesses formed in the float. upper end of the float member **42,** offset with respect to a longitudinal axis thereof.

The float member **42** is spring biased in an upward direction by means of a coiled spring **48** bearing at a bottom end thereof **50** against a base **52** of the housing, and at an upper end thereof **54,** against a wall portion of the float member. The base member **52** is formed with several apertures **56** constituting a fluid inlet of the valve **10.**

It is noted that the elongated flexible closure membrane strip **44** bears on a support surface **45** which inclines and with respect to a longitudinal axis of the valve corresponding with an inclination of the elongated slit-like aperture of the primary valve seating **40.**

A top end of the flow passage **28** extends into the top space **32** defining an auxiliary port of an auxiliary valve, said auxiliary port defined by a peripheral projection **58.**

The top space **32** accommodates an auxiliary valve comprising a piston member **60** axially displaceable within the top space **32** and comprising an annular shoulder **62** at a lower portion thereof formed with a plurality of apertures **64** and a stud **66** fitted for retention of a deformable scaling member **68** formed with a coaxial aperture **70** sized for mounting over said stud **66** such that the deformable sealing member **68** is slidingly displaceable about the stud **66** though presenting from disengagement thereof, owing to lateral projections **72** formed on the stud **66.**

The piston member **60** is normally biased in a downward direction by means of a coiled spring **76** bearing at one end against the annular shoulders **62** and at another end against a top base **78** packing together the auxiliary valve components within the top space **32** of the housing.

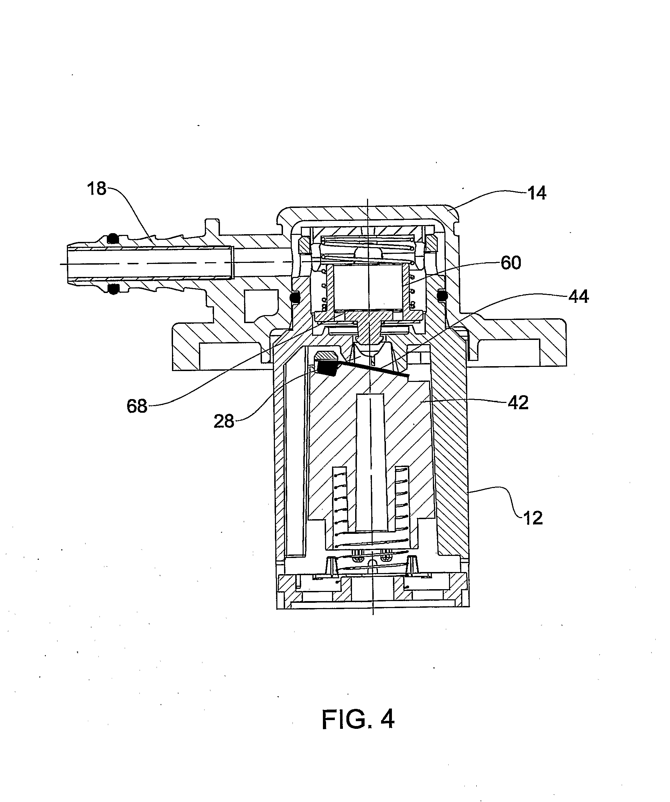

The bottom float member **42** is displaceable between an open position (Fig. 5) where the primary port **38** is entirely open, and a completely closed position (Fig. 4) where the primary port **38** is sealed owing to the elongated flexible closure **44** sealingly bearing against the elongated slit-like aperture **40.** It is appreciated that unsealing of the primary port **38** follows the so-called *peeling effect* as known for example from US Patent Serial No. 5,738,132. The primary valve will displace into its sealed position (Fig. 4) e.g. at the event of roll-over of the vehicle or upon significant acceleration or deceleration of the vehicle or upon fuel level raise for the fuel tank.

The auxiliary valve is a two stage check valve formed with a bleeding valve in the form of apertures **64,** where the check valve facilitates fluids flow only in direction from the fluid outlet port **18** towards the auxiliary port namely, allowing ingress into the fuel tank (Fig. 2) though preventing fluids flow in an opposite direction.

The arrangement is such that peripheral portions of the deformable sealing member **68** are adapted for sealing engagement over the annular projection **58** constituting the sealing seat of the auxiliary port. The piston member **60** is normally biased into its downward sealing position (Figs. 4 and 5) by means of the coiled spring **76** which together with the atmospheric pressure tend to displace the piston **60** in the downward direction so as to clamp the peripheral portion of the deformable sealing member **68** into sealing engagement of the auxiliary port.

It is noticed that the piston **60** is in the form of a hollow body with a space **80** communicating between the apertures **64** of the bleeding valve and the top space of the housing.

In the position of Fig. 4, the auxiliary valve is considered to be closed in as far as the piston **60** is downwardly displaced so as to seal the auxiliary port **58.** However, in the position of Fig. 2 the bleeding valve is open owing to the formation of the deformable sealing member **68,** giving rise to an open fluid flow through the apertures **64,** facilitating fluid flow in direction from the outlet port **18,** through the top space **32** of the housing, into the space **80** of piston **60** and out through apertures **64,** into the flow passage **28** down to the bottom space **30** of the housing and into the fuel tank (not shown).

However, in the position of Fig. 5, the auxiliary port is sealed and similarly, the bleeding valve is sealed in a so-called pressure holding position, wherein the pressure within the fuel tank does not exceed the atmospheric pressure and the biasing effect of the coiled spring **76.**

The valve is pressure responsive and operates in three distinct positions as follows, using the following nomenclature:
**Pₜₐₙₖ** denotes the fuel vapor pressure within the fuel tank;
**Pₐₜₘ** denotes the atmospheric pressure; and
**P_{spring}** denotes the effective pressure applied by the biasing effect of the spring member of the auxiliary valve.

- When **Pₜₐₙₖ < Pₐₜₘ** than the auxiliary port and the primary port open to air the fuel tank namely allow fluid flow from the valve's fluid outlet port towards the valve's fluid inlet (Fig. 2);

This position occurs when the pressure within the fuel tank drops below atmospheric pressure and the bleeding valve of the auxiliary valve facilitates air ingress into the fuel tank to thereby prevent generation of under pressure in the fuel tank which may result in damage thereto.
- When **Pₐₜₘ < Pₜₐₙₖ < (Pₐₜₘ** + **P_{spring})** then the auxiliary port and the bleeding valve remain sealed, thus retaining a predetermined pressure within the fuel tank (*'pressure holding position'*) (Fig. 4);

This position is principally similar to the previous position however with the biasing effect of the coiled spring **76** applying a force so as to insure tight sealing of the auxiliary port.
- When **Pₜₐₙₖ** > **(Pₐₜₘ** + **P_{spring})** than the auxiliary port and the primary port open to air the fuel tank namely allow fluid flow from the valve's fluid inlet port towards the valve's fluid outlet (Fig. 6);

This position occurs with the pressure within the fuel tank exceeds the atmospheric pressure and the force applied by the spring **68,** thereby facilitating fluid egress from the fuel tank, however at an accelerated rate.

Whilst an embodiment has been shown and described, it is to be understood that it is not intended thereby to limit the disclosure, but rather it is intended to cover all embodiments, modifications and arrangements falling within the scope of the present invention, as defined in the appended claims.

## Claims

1. A fuel valve comprising a primary valve and a pressure responsive auxiliary valve, both being axially accommodated and displaceable within a common housing **(12)** formed with a fluid inlet **(56)** and a fluid outlet port **(18),** and a partition **(26)** extending between said primary valve and said auxiliary valve; said partition comprising a flow passage **(28)** extending between a primary port **(38)** at a bottom face of the partition and an auxiliary port **(58)** at a top face of the partition; said primary port **(38)** sealable by a sealing member **(44)** of the primary valve and said auxiliary port sealable by a sealing member **(68)** of the auxiliary valve, **wherein the auxiliary valve comprises a piston member (60) axially displaceable within the housing (12) and is formed with one or more apertures (64), and a check valve facilitating fluid flow only in direction from the fluid outlet port (18) towards the auxiliary port (58), said sealing member (68) of the auxiliary valve is further fitted for sealing engagement of said one or more apertures (64) at the event of flow in direction from the auxiliary port (58) towards the outlet port (18).**

2. A fuel valve according to claim 1, wherein the primary valve is a rollover valve and where the primary port **(38)** is a substantially elongated slit-like aperture bounded by a primary valve seating **(40);** a float member **(42)** is axially displaceable within the housing **(12)** between the fluid inlet **(56)** and the primary port **(38);** where the sealing member of the primary valve is in the form of an elongated flexible closure membrane strip **(44)** anchored at one end thereof to an end of the float member **(42)** adjacent primary port **(38)** and at a portion thereof offset with respect to the primary port; and further there is provided a spring biasing member **(48)** located within the housing **(12)** and bearing on the float member **(42)** so as to spring bias it in the direction of the primary port**(38)**.

3. A fuel valve according to claim 1, wherein the piston **(60)** is normally biased into sealing engagement of the auxiliary port **(58)** and is displaceable to facilitate fluid flow in direction from the auxiliary port **(58)** towards the fluid outlet port**(18)**.

4. A fuel valve according to claim 1, wherein said sealing member **(68)** of the auxiliary valve is a deformable member and deforms to open said one or more apertures **(64)** so as to facilitate fluid flow in the direction from the fluid outlet port **(18)** towards the auxiliary port**(58)**.

5. A fuel valve according to claim 4, wherein the deformable sealing member **(68)** is articulated to a bottom face of the piston member **(60)** and serves also for sealing engagement of the auxiliary port **(58).**

6. A fuel valve according to claim 4, wherein the piston member **(60)** comprises a stud **(66)** projecting from a bottom wall thereof and fitted for retention of the deformable sealing member **(68);** said stud **(66)** projecting into the auxiliary port **(58)** whenever the piston member **(60)** is at its normally biased position, sealingly engaging the auxiliary port **(58).**

7. A fuel valve according to claim 6, wherein a peripheral portion of the deformable sealing member **(68)** is clamped between a peripheral seal seat of the auxiliary port **(58)** and a bottom face of the piston member **(60);** and wherein a central portion of the deformable sealing member **(68)** is deformable for sealing/unsealing of the one or more apertures **(64).**

8. A fuel tank flitted with a fuel valve according to claim 1.

## Patentansprüche

1. Kraftstoffventil umfassend:
ein Primärventil und ein auf Druck ansprechendes Hilfsventil, wobei beide axial untergebracht und verschiebbar innerhalb eines gemeinsamen Gehäuses (12) sind, das mit einem Flüssigkeitseinlass- (56) und einem Flüssigkeitsauslassanschluss (18) ausgebildet ist, und einer Abtrennung (26), die sich zwischen dem Primärventil und dem Hilfsventil erstreckt, ausgebildet ist; wobei die Abtrennung einen Strömungskanal (28) umfasst, der sich zwischen einem Primäranschluss (38) an einer Unterseite der Abtrennung und einem Hilfsanschluss (58) an einer Oberseite der Abtrennung erstreckt; wobei der Primäranschluss (38) mit einem Dichtungselement (44) des Primärventils abdichtbar ist und das Hilfsventil mit einem Dichtungselement (68) des Hilfsventils abdichtbar ist, **wobei das Hilfsventil ein Kolbenelement (60) umfasst, das axial innerhalb des Gehäuses (12) verschiebbar ist und mit einer oder mehreren Öffnungen (64) ausgebildet ist, und ein Rückschlagventil umfasst, das den Durchfluss nur in die Richtung vom Flüssigkeitsauslassanschluss (18) zum Hilfsanschluss (58) ermöglicht, wobei das Dichtungselement (68) des Hilfsventils weiter zum dichtenden in Eingriff gelangen der einen der oder mehreren Öffnungen (64) im Falle eines Durchlasses in die Richtung vom Auslassanschluss (18) zum Hilfsanschluss (58) eingerichtet ist.**

2. Kraftstoffventil nach Anspruch 1, wobei das Primärventil ein Schlagventil ist und wobei der Primäranschluss (38) eine im wesentlichen längliche schlitzartige Öffnung ist, die durch einen primären Ventilsitz (40) begrenzt ist; ein Schwimmelement (42) in dem Gehäuse (12) zwischen dem Flüssigkeitseinlass (56) und dem Primäranschluss (38) axial verschiebbar ist; wobei das Dichtungselement des Primärventils die Form eines länglichen, flexiblen Verschlussmembranstreifens (44) hat, an einem Ende davon mit einem Ende des Schwimmelements (42) benachbart zum Primäranschluss (38) verankert ist, und an einem Abschnitt davon in Bezug auf den Primäranschluss versetzt ist; und wobei ferner ein Federvorspannelement (48) bereitgestellt wird, das innerhalb des Gehäuses (12) angeordnet ist und auf das Schwimmelement (42) aufgesetzt ist, so dass es in Richtung des Primäranschlusses (38) vorgespannt wird.

3. Kraftstoffventil nach Anspruch 1, wobei das Kolbenelement (60) normalerweise zum dichtenden in Eingriff stehen des Hilfsanschlusses (58) vorgespannt ist, und verschiebbar ist, um einen Durchfluss in die Richtung vom Hilfsanschluss (58) zum Flüssigkeitsauslassanschluss (18) zu ermöglichen.

4. Kraftstoffventil nach Anspruch 1, wobei das Dichtungselement (68) des Hilfsventils ein verformbares Element ist, und sich verformt, um die eine oder mehreren Vorrichtungen (64) zu öffnen, so dass ein Durchfluss in die Richtung vom Flüssigkeitsauslassanschluss (18) zum Hilfsanschluss (58) ermöglicht wird.

5. Kraftstoffventil nach Anspruch 4, wobei das verformbare Dichtungselement (68) an einer Unterseite des Kolbenelements (60) angelenkt ist und auch zum dichtenden Einklinken des Hilfsanschlusses (58) dient.

6. Kraftstoffventil nach Anspruch 4, wobei das Kolbenelement (60) einen Bolzen (66) umfasst, der aus einer Bodenwand herausragt und zum Halten des verformbaren Dichtungselements (68) angebracht ist; wobei der Bolzen (66) in den Hilfsanschluss (58) hineinragt, wann immer das Kolbenelement (60) an seiner, normalerweise vorgespannten Position ist, mit dem Hilfsanschluss (58) dichtend in Eingriff zu stehen.

7. Kraftstoffventil nach Anspruch 6, wobei ein peripherer Abschnitt des verformbaren Dichtungselements (68) zwischen einer peripheren Ventilsitzdichtung des Hilfsanschlusses (58) und einer Unterseite des Kolbenelements (60) eingeklemmt ist; und wobei ein zentraler Abschnitt des verformbaren Dichtungselements (68) verformbar ist zum Abdichten/Entsiegeln der einen oder mehreren Öffnungen (64).

8. Kraftstofftank, der mit einem Kraftstoffventil nach Anspruch 1 ausgestattet ist.

## Revendications

1. Soupape de carburant comprenant une soupape principale et une soupape auxiliaire sensible à la pression, les deux étant reçues et déplaçables axialement à l'intérieur d'un boîtier commun (12) formé avec une entrée (56) de fluide et un orifice (18) de sortie de fluide, et une cloison (26) s'étendant entre ladite soupape principale et ladite soupape auxiliaire ; ladite cloison comprenant un passage (28) d'écoulement s'étendant entre un orifice (38) principal au niveau d'une face inférieure de la cloison et un orifice (58) auxiliaire au niveau d'une face supérieure de la cloison ; ledit orifice (38) principal apte à être fermé hermétiquement par un élément (44) de fermeture étanche de la soupape principale et ledit orifice auxiliaire apte à être fermé hermétiquement par un élément (68) de fermeture étanche de la soupape auxiliaire, **dans laquelle la soupape auxiliaire comprend un élément (60) de piston déplaçable axialement à l'intérieur du boîtier (12) et est formée avec une ou plusieurs ouverture(s) (64), et un clapet anti-retour facilitant l'écoulement de fluide uniquement dans le sens de l'orifice (18) de sortie de fluide vers l'orifice (58) auxiliaire, ledit élément (68) de fermeture étanche de la soupape auxiliaire est en outre apte à un engagement étanche de ladite/desdites une ou plusieurs ouverture(s) (64) dans le cas d'un écoulement dans un sens de l'orifice (58) auxiliaire vers l'orifice (18) de sortie.**

2. Soupape de carburant selon la revendication 1, dans laquelle la soupape principale est une soupape de retournement et où l'orifice (38) principal est une ouverture sensiblement allongée de type fente délimitée par un siège (40) de soupape principale ; un élément (42) flottant est déplaçable axialement à l'intérieur du boîtier (12) entre l'entrée (56) de fluide et l'orifice (38) principal ; où l'élément de fermeture étanche de la soupape principale est sous la forme d'une bande (44) de membrane de fermeture flexible allongée ancrée à une extrémité de celle-ci jusqu'à une extrémité de l'élément (42) flottant adjacente à l'orifice (38) principal et à une partie de celle-ci décalée par rapport à l'orifice principal ; et il est en outre prévu un élément (48) de poussée par ressort situé à l'intérieur du boîtier (12) et portant sur l'élément (42) flottant de façon à le pousser par ressort dans la direction de l'orifice (38) principal.

3. Soupape de carburant selon la revendication 1, dans laquelle le piston (60) est normalement poussé en engagement étanche de l'orifice (58) auxiliaire et est déplaçable pour faciliter l'écoulement de fluide dans un sens de l'orifice (58) auxiliaire vers l'orifice (18) de sortie de fluide.

4. Soupape de carburant selon la revendication 1, dans laquelle ledit élément (68) de fermeture étanche de la soupape auxiliaire est un élément déformable et se déforme pour ouvrir ladite/lesdites une ou plusieurs ouvertures (64) de façon à faciliter l'écoulement de fluide dans le sens de l'orifice (18) de sortie de fluide vers l'orifice (58) auxiliaire.

5. Soupape de carburant selon la revendication 4, dans laquelle l'élément (68) de fermeture étanche déformable est articulé sur une face inférieure de l'élément (60) de piston et sert également à un engagement étanche de l'orifice (58) auxiliaire.

6. Soupape de carburant selon la revendication 4, dans laquelle l'élément (60) de piston comprend un goujon (66) se projetant d'une paroi inférieure de celui-ci et apte à une rétention de l'élément (68) de fermeture étanche déformable ; ledit goujon (66) se projetant dans l'orifice (58) auxiliaire lorsque l'élément (60) de piston est dans sa position normalement poussée, engageant de façon étanche l'orifice (58) auxiliaire.

7. Soupape de carburant selon la revendication 6, dans laquelle une partie périphérique de l'élément (68) de fermeture étanche déformable est pincée entre un siège de joint périphérique de l'orifice (58) auxiliaire et une face inférieure de l'élément (60) de piston ; et dans laquelle une partie centrale de l'élément (68) de fermeture étanche déformable est déformable pour fermer de façon étanche / ouvrir la ou les ouvertures (64).

8. Réservoir de carburant équipé d'une soupape de carburant selon la revendication 1.
